# EUROPÄISCHE PATENTSCHRIFT

(11) **EP 3 500 924 B1**
(45) Veröffentlichungstag und Bekanntmachung des Hinweises auf die Patenterteilung: **09.09.2020**
(21) Anmeldenummer: 17751322.3
(22) Anmeldetag: 28.07.2017
(51) Int. Cl.: G06F 7/58, H04L 9/08

(54) **QUANTENZUFALLSZAHLENGENERATOR UND VERFAHREN ZUM ERZEUGEN EINER ZUFALLSZAHL MIT EINEM QUANTENZUFALLSZAHLENGENERATOR**
QUANTUM RANDOM NUMBER GENERATOR AND METHOD FOR PRODUCING A RANDOM NUMBER BY MEANS OF A QUANTUM RANDOM NUMBER GENERATOR
GÉNÉRATEUR DE NOMBRE ALÉATOIRE QUANTIQUE ET PROCÉDÉ DE GÉNÉRATION D'UN NOMBRE ALÉATOIRE AU MOYEN D'UN GÉNÉRATEUR DE NOMBRE ALÉATOIRE QUANTIQUE

(30) Priorität: 17.08.2016 DE 102016215362
(43) Veröffentlichungstag der Anmeldung: 26.06.2019
(73) Patentinhaber: Robert Bosch GmbH, 70442 Stuttgart (DE)
(72) Erfinder: HERRMANN, Ingo, 71292 Friolzheim (DE); SCHNITZER, Reiner, 72762 Reutlingen (DE); KRAYL, Oliver, 70839 Gerlingen (DE); STROHM, Thomas, 71679 Asperg (DE)
(86) Internationale Anmeldenummer: PCT/EP2017/069185
(87) Internationale Veröffentlichungsnummer: WO 2018/033369

(56) Entgegenhaltungen:
- US-A- 5 148 112
- MASSARI NICOLA ET AL: "A low bias variation SPAD-based pixel for a quantum random generator", OPTOMECHATRONIC MICRO/NANO DEVICES AND COMPONENTS III : 8 - 10 OCTOBER 2007, LAUSANNE, SWITZERLAND;PROCEEDINGS OF SPIE, SPIE, BELLINGHAM, WASH, Bd. 9648, 13. Oktober 2015 (2015-10-13), Seiten 964813-964813, XP060062696, DOI: 10.1117/12.2195086 ISBN: 978-1-62841-730-2
- THAMRIN N M ET AL: "A Photonic-based Random Number Generator for Cryptographic Application", SOFTWARE ENGINEERING, ARTIFICIAL INTELLIGENCE, NETWORKING, AND PARALLEL/DISTRIBUTED COMPUTING, 2008. SNPD '08. NINTH ACIS INTERNATIONAL CONFERENCE ON, IEEE, PISCATAWAY, NJ, USA, 6. August 2008 (2008-08-06), Seiten 356-361, XP031315771, ISBN: 978-0-7695-3263-9
- MASSARI NICOLA ET AL: "16.3 A 16x16 pixels SPAD-based 128-Mb/s quantum random number generator with -74dB light rejection ratio and -6.7ppm/°C bias sensitivity on temperature", 2016 IEEE INTERNATIONAL SOLID-STATE CIRCUITS CONFERENCE (ISSCC), IEEE, 31. Januar 2016 (2016-01-31), Seiten 292-293, XP032873608, DOI: 10.1109/ISSCC.2016.7418022 ISBN: 978-1-4673-9466-6 [gefunden am 2016-02-23]
- Joseph Hoffbeck: "Paper ID #8459 Using Practical Examples in Teaching Digital Logic Design", 121st ASEE Annual Conference & Exposition, 1. Juni 2014 (2014-06-01), XP055417880, Gefunden im Internet: URL:https://www.asee.org/file_server/paper s/attachment/file/0004/4930/Using_Practica l_Examples_in_Teaching_Digital_Logic_Desig n_v5.pdf [gefunden am 2017-10-23]

## Beschreibung

### Stand der Technik

Die Erfindung betrifft einen Quantenzufallszahlengenerator und ein Verfahren zum Erzeugen einer Zufallszahl mit einem Quantenzufallszahlengenerator.

Quantenzufallszahlengeneratoren zur Anwendung in Sicherheitssystemen mit einer schwachen Lichtquelle und zwei Einzelphotonendetektoren sind bekannt. So zeigt beispielsweise das Dokument "Practical aspects of security certification for commercial quantum technologies" (Walenta et al., DOI:10.1117/12.2193776) einen Quantenzufallszahlengenerator, bei welchem die Detektoren aktiviert werden und danach ein Lichtpuls ausgesendet wird, der derart gewählt wird, dass im Mittel genau ein Photon auf einen der Detektoren trifft.

### Offenbarung der Erfindung

### Vorteile der Erfindung

Durch einen Quantenzufallszahlengenerator mit einem ersten Einzelphotonendetektor, der ein erstes Ereignis detektiert, und einem zweiten Einzelphotonendetektor, der ein zweites Ereignis detektiert und mit einer elektronischen Schaltung mittels derer der erste Einzelphotonendetektor und der zweite Einzelphotonendetektor derart verschaltet sind, dass nach Detektion des ersten Ereignisses dieses ausgegeben wird und eine Ausgabe eines detektierten zweiten Ereignisses unterdrückt wird, können vorteilhafterweise auch eigentliche Zwei-Klick-Ereignisses als Ein-Klick-Ereignisse zum Erzeugen einer Zufallszahl verwendet werden. Indem die Anzahl an nicht verwertbaren Messungen reduziert wird und die Bitrate zur Erzeugung einer Zufallszahl erhöht wird, kann die Effizienz des Quantenzufallszahlengenerators gesteigert werden.

Unter einem ersten Ereignis kann hierbei ein Ereignis verstanden werden, welches zeitlich vor einem zweiten Ereignis auftritt.

Durch die in den abhängigen Ansprüchen aufgeführten Maßnahmen sind vorteilhafte Weiterbildungen und Verbesserungen der im unabhängigen Anspruch angegebenen Vorrichtung möglich.

Ist die elektronische Schaltung des Quantenzufallszahlengenerators dazu ausgelegt, eine Detektion des ersten Ereignisses oder des zweiten Ereignisses anzuzeigen, so hat dies den Vorteil, dass eine sichere Aussage darüber getroffen werden kann, dass ein Ereignis stattgefunden hat. Weiterhin kann zweckmäßigerweise auch eine sichere Aussage getroffen werden, welcher der zwei Einzelphotonendetektoren das erste Ereignis detektiert hat, womit entweder eine logische Eins oder eine logische Null erzeugt werden kann.

Gemäß eines weiteren Aspekts kann vorgesehen sein, dass die elektronische Schaltung rücksetzbar ausgestaltet ist. Dadurch kann beliebig oft eine Photonendetektion und damit eine Ereignisdetektion erfolgen, wodurch sich in einfacher Weise eine Vielzahl von Zufallszahlen hintereinander erzeugen lässt.

Zweckmäßigerweise kann die elektronische Schaltung des Quantenzufallszahlengenerators ein erstes bistabiles Kippglied mit einem ersten Dateneingang, mit einem ersten Takteingang und mit einem ersten Reset-Eingang sowie mit einem ersten Ausgang und mit einem ersten invertierten Ausgang und ein zweites bistabiles Kippglied mit einem zweiten Dateneingang, mit einem zweiten Takteingang und mit einem zweiten Reset-Eingang sowie mit einem zweiten Ausgang und mit einem zweiten invertierten Ausgang aufweisen. Hierdurch ist gewährleistet, dass der Quantenzufallszahlengenerator die Ausgabe eines ersten Ereignisses ermöglichen und die Ausgabe eines zweiten Ereignisses effizient unterdrücken kann.

In einer weiteren Ausgestaltung der Erfindung ist es möglich, dass die elektronische Schaltung ein Oder-Gatter mit einem ersten Eingang, mit einem zweiten Eingang und mit einem Ausgang aufweist. Hierdurch kann eine sichere Aussage darüber getroffen werden, ob ein Ereignis detektiert wurde und wenn ja, kann z.B. der erste Ausgang das Zufallsbit darstellen.

Ist in einer alternativen Ausführungsform der Erfindung der erste Reset-Eingang des ersten bistabilen Kippglieds mit dem zweiten Reset-Eingang des zweiten bistabilen Kippglieds verbunden, so lassen sich zweckmäßigerweise das erste bistabile Kippglied und das zweite bistabile Kippglied der elektronischen Schaltung im Wesentlichen zeitgleich zurücksetzen.

Weiterhin ist es vorteilhaft, wenn der erste Einzelphotonendetektor mit dem ersten Takteingang des ersten bistabilen Kippglieds und der zweite Einzelphotonendetektor mit dem zweiten Takteingang des zweiten bistabilen Kippglieds verbunden ist. Denn somit ist gewährleistet, dass jedes der bistabilen Kippglieder jeweils nur Ereignisse detektieren und ausgeben bzw. unterdrücken kann, die von dem mit dem jeweiligen bistabilen Kippglied verbundenen Einzelphotonendetektor stammen.

In einer weiteren Ausgestaltungsform der Erfindung kann vorgesehen sein, dass der Quantenzufallszahlengenerator ein Gehäuse aufweist, in welchem der erste Einzelphotonendetektor, der zweite Einzelphotonendetektor sowie eine Lichtquelle angeordnet sind. Dies hat den Vorteil, dass die zuvor erwähnten Komponenten platzsparend am gleichen Ort untergebracht werden können.

Weiterhin ist es vorteilhaft, wenn das Gehäuse lichtdicht ausgestaltet ist, sodass kein Licht von außen in das Gehäuse und/oder kein Licht aus dem Gehäuse nach außen gelangen kann. Denn hierdurch kann sichergestellt werden, dass keine störenden Fremdlichtquellen die Einzelphotonendetektoren bzw. die elektronische Schaltung beeinflussen und/oder dass ein für einen funktionierenden Quantenzufallszahlengenerator notwendiger minimaler Licht- bzw. Photonenstrom nicht unterschritten wird.

Es ist ferner zweckmäßig, wenn eine dem ersten Einzelphotonendetektor und dem zweiten Einzelphotonendetektor zugewandte Gehäuseseite, insbesondere gedämpft, reflektierend ausgestaltet ist und/oder dass weitere Gehäuseseiten absorbierend ausgestaltet sind. Denn hierdurch lassen sich die optischen Eigenschaften, insbesondere der Anteil an unerwünschtem Streulicht von den Seitenwänden des Gehäuses effektiv unterdrücken. Des Weiteren kann über die Reflektionseigenschaften der den Einzelphotonendetektoren zugewandten Gehäuseseite der Licht- bzw. Photonenstrom innerhalb des Gehäuses voreingestellt werden.

Weiterhin ist es von Vorteil, wenn der erste Einzelphotonendetektor und der zweite Einzelphotonendetektor als Einzelphoton-Avalanchediode, insbesondere als SPAD (single photon avalanche diode), ausgestaltet ist. Denn Einzelphoton-Avalanchedioden bzw. SPADs sind kostengünstige Bauteile, die sich in einfacher Weise auf einem Substrat oder einer Leiterplatte, insbesondere in einem Gehäuse, anbringen lassen.

Die zuvor genannten Vorteile gelten in entsprechender Weise auch für ein Verfahren zum Erzeugen einer Zufallszahl mit einem Quantenzufallszahlengenerator.

Hierbei kann das Verfahren die Schritte des Einlesens eines durch ein auf einen ersten Einzelphotonendetektor auftreffendes Photon erzeugten ersten Signals als ein Ereignis durch einen ersten Takteingang eines ersten bistabilen Kippglieds, des Durchschaltens eines an einem ersten Dateneingang des ersten bistabilen Kippglieds anliegenden ersten logischen Wertes an einen ersten Ausgang des ersten bistabilen Kippglieds, sowie des Invertierens des an dem ersten Ausgang anliegenden ersten logischen Wertes und Ausgebens des an einem ersten invertierten Ausgang des ersten bistabilen Kippglieds anliegenden ersten invertierten logischen Wertes an einen zweiten Dateneingang eines zweiten bistabilen Kippglieds, oder des Einlesens eines durch ein auf einen zweiten Einzelphotonendetektor auftreffendes Photon erzeugten zweiten Signals als das Ereignis durch einen zweiten Takteingang eines zweiten bistabilen Kippglieds, des Durchschaltens eines an einem zweiten Dateneingang des zweiten bistabilen Kippglieds anliegenden ersten logischen Wertes an einen zweiten Ausgang des zweiten bistabilen Kippglieds, sowie des Invertierens des an dem zweiten Ausgang anliegenden zweiten logischen Wertes und Ausgebens des an einem zweiten invertierten Ausgang des zweiten bistabilen Kippglieds anliegenden zweiten invertierten logischen Wertes an einen ersten Dateneingang des ersten bistabilen Kippglieds aufweisen.

In einer weiteren Ausgestaltung der Erfindung ist es von Vorteil, wenn eine logische Eins ausgegeben wird, wenn an dem ersten Ausgang als erster logischer Wert eine logische Eins anliegt oder wenn eine logische Null ausgegeben wird, wenn an dem ersten Ausgang als erster logischer Wert eine logische Null anliegt. Denn hierdurch kann der ausgegebene Wert weiterverarbeitet werden.

Zweckmäßigerweise kann ein Schritt des Weiterleitens des an dem ersten Ausgang anliegenden ersten logischen Wertes an einen ersten Eingang eines Oder-Gatters und des Weiterleitens des an dem zweiten Ausgang anliegenden zweiten logischen Wertes an einen zweiten Eingang des Oder-Gatters und des Ausgebens eines resultierenden logischen Wertes an einem Ausgang des Oder-Gatters zur Anzeige, dass das Ereignis stattgefunden hat, erfolgen. Dadurch kann sicher festgestellt werden, ob ein Ereignis stattgefunden hat. Des Weiteren kann eine sichere Aussage getroffen werden, welcher der zwei Einzelphotonendetektoren das erste Ereignis detektiert hat, womit entweder eine logische Eins oder eine logische Null erzeugt werden kann.

Weiterhin ist es vorteilhaft, wenn der erste Ausgang und der zweite Ausgang zurückgesetzt werden, nachdem durch wenigstens den ersten Einzelphotonendetektor oder den zweiten Einzelphotonendetektor ein Ereignis detektiert wurde. Hierdurch kann ein effizientes Verfahren bereitgestellt werden.

Ferner ist es zweckmäßig, wenn das Verfahren wiederholt ausgeführt wird, eine binäre Zufallszahl aus einer Folge von logischen Einsen und Nullen gebildet wird und die Zufallszahl aus der binären Zufallszahl berechnet wird. Denn dadurch kann die Zufallszahl effizient erzeugt werden.

Ausführungsbeispiele der Erfindung sind in den Zeichnungen dargestellt und in der nachfolgenden Beschreibung näher erläutert. Es zeigen:
- Figur 1: eine schematische Darstellung einer erfindungsgemäßen elektronischen Schaltung eines Quantenzufallszahlengenerators zum Erzeugen einer Zufallszahl;
- Figur 2: eine Seitenansicht eines Gehäusequerschnitts eines erfindungsgemäßen Quantenzufallszahlengenerators;
- Figur 3: eine Draufsicht eines Gehäusequerschnitts eines erfindungsgemäßen Quantenzufallszahlengenerators; sowie
- Figur 4: ein erfindungsgemäßes Verfahren zum Erzeugen einer Zufallszahl mit einem erfindungsgemäßen Quantenzufallszahlengenerator.

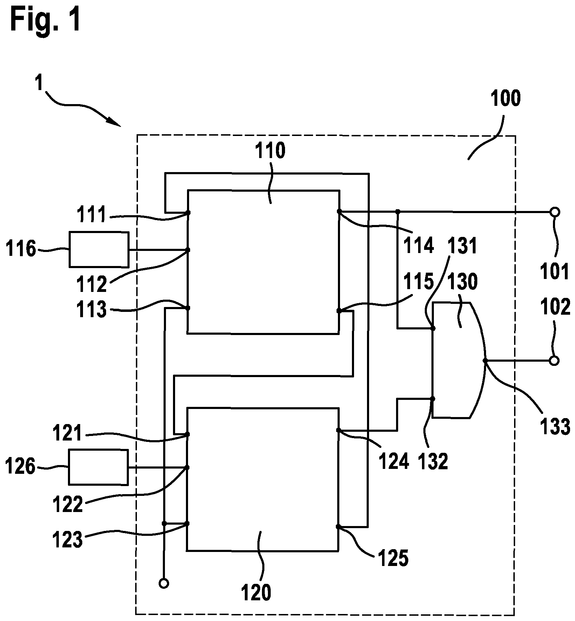

In Figur 1 ist eine erfindungsgemäße elektronische Schaltung 100 als Teil eines Quantenzufallszahlengenerators 1 dargestellt. Die elektronische Schaltung 100 enthält ein erstes bistabiles Kippglied 110 sowie ein zweites bistabiles Kippglied 120, welche im Folgenden erstes Flipflop 110 bzw. zweites Flipflop 120 genannt werden. Weiterhin enthält die elektronische Schaltung 100 ein Oder-Gatter 130.

Das erste Flipflop 110 weist einen ersten Dateneingang 111 auf, welcher mit einem zweiten invertierten Ausgang 125 des zweiten Flipflops 120 verbunden ist. Ferner umfasst das erste Flipflop 110 einen ersten Takteingang 112 auf, welcher mit einem ersten Photonendetektor, bevorzugt mit einem Einzelphotonendetektor insbesondere mit einer single photon avalanche diode (SPAD 116) verbunden ist. Weiterhin umfasst das erste Flipflop 110 einen ersten Reset-Eingang 113, welcher mit einem zweiten Reset-Eingang 123 des zweiten Flipflops 120 verbunden ist, und über welchen das erste Flipflop 110 zurückgesetzt werden kann. Des Weiteren umfasst das erste Flipflop 110 einen ersten Ausgang 114 sowie einen ersten invertierten Ausgang 115. Der erste invertierte Ausgang 115 ist mit dem zweiten Dateneingang 121 des zweiten Flipflops 120 verbunden. Das zweite Flipflop 120 weist analog zu dem ersten Flipflop 110 einen zweiten Takteingang 122 auf. An den zweiten Takteingang 122 kann hierbei ein zweiter Photonendetektor, bevorzugt ein Einzelphotonendetektor, insbesondere eine zweite SPAD 126 angeschlossen werden. Weiterhin weist das zweite Flipflop 120 den zweiten Reset-Eingang 123 auf, über welchen das zweite Flipflop 120 zeitgleich mit dem ersten Flipflop 110 zurückgesetzt werden kann. Des Weiteren weist das zweite Flipflop 120 einen zweiten Ausgang 124 auf.

Der erste Ausgang 114 des ersten Flipflops 110 ist mit einem ersten Eingang 131 des Oder-Gatters 130 verbunden. Des Weiteren ist der zweite Ausgang 124 des zweiten Flipflops 120 mit dem zweiten Eingang 132 des Oder-Gatters 130 verbunden. Der erste Ausgang 114 des ersten Flipflops 110 fungiert hierbei als ein erster Signalausgang 101 der elektronischen Schaltung 100. Ein Ausgang 133 des Oder-Gatters 130 fungiert hierbei als zweiter Signalausgang 102 der elektrischen Schaltung 100.

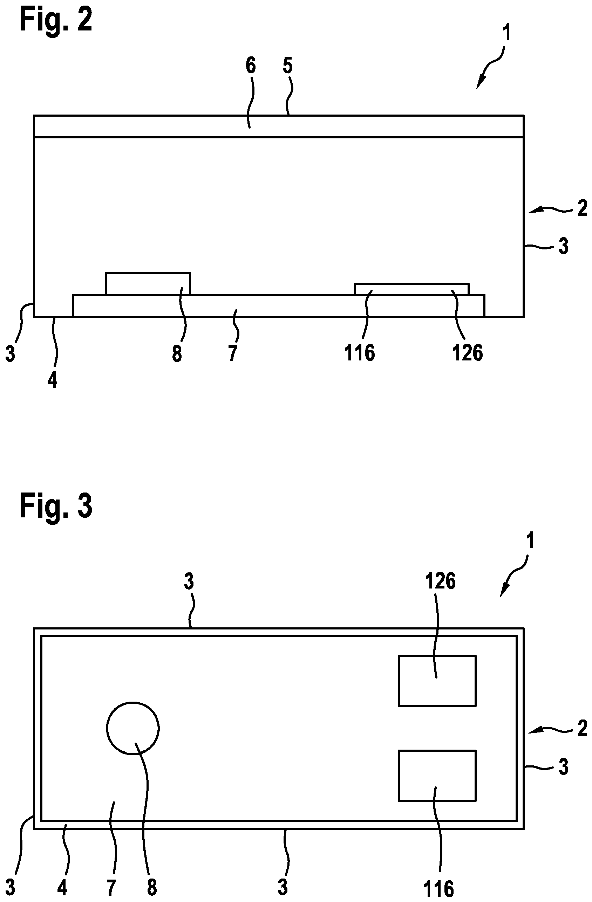

In Figur 2 ist eine Seitenansicht eines Gehäusequerschnitts des erfindungsgemäßen Quantenzufallszahlengenerators 1 dargestellt. Der Quantenzufallszahlengenerator 1 weist ein lichtdichtes Gehäuse 2 auf, mit Seitenwänden 3, einem Boden 4 sowie einem Deckel 5. Der Boden 4 und insbesondere die Seitenwände 3 können hierbei zweckmäßigerweise lichtabsorbierend ausgestaltet sein. Der Deckel 5 kann in vorteilhafter Weise mit einem Reflektor 6 ausgestattet sein, wobei der Reflektor 6 auf ihn auftreffendes Licht gedämpft reflektiert bzw. abschwächt. Ferner enthält das Gehäuse 2 des Quantenzufallszahlengenerators 1 ein Substrat 7, auf welchem sich eine Lichtquelle 8 sowie die erste SPAD 116 und die zweite SPAD 126 befinden.

Die Lichtquelle 8 kann hierbei als Glühlampe, Glimmlampe, Halogenlampe oder als Halbleiterlichtquelle ausgebildet sein. Insbesondere kann die Lichtquelle 8 als LED oder Laserdiode ausgestaltet sein. Ferner kann die Lichtquelle 8 hierbei dauerhaft betrieben werden, denn eine Messzeitbegrenzung obliegt erfindungsgemäß nicht der Lichtquelle bzw. der elektronischen Ansteuerung der Lichtquelle, sondern der elektronischen Schaltung 100 des Quantenzufallszahlengenerators 1.

In einer weiteren Ausgestaltungsform der Erfindung ist es möglich, dass die Lichtquelle 8 als Einzelphotonenquelle ausgestaltet ist. Hierbei ist es zweckmäßig, wenn die Dämpfung der Reflektion der der Quellen und den Detektoren gegenüberliegenden Gehäusewand möglichst gering gehalten wird.

Es ist zweckmäßig, wenn die Lichtquelle 8 dazu ausgebildet ist, kurze und/oder schwache Lichtpulse auszusenden. Weiterhin ist es vorteilhaft, wenn die Lichtquelle 8 dazu ausgebildet ist, dass der von ihr emittierte Lichtstrom über einen großen Bereich hinweg einstellbar ist.

Alternativ oder zusätzlich ist es möglich, dass der Lichtstrom der Lichtquelle 8 durch ein teilweises Verschattungsmittel bzw. durch einen Shutter begrenzt wird.

Das von der Lichtquelle 8 emittierte Licht wird größtenteils an dem Reflektor 6 gedämpft reflektiert und trifft auf die erste SPAD 116 und/oder die zweite SPAD 126. Der Teil des Lichts, welcher von der Lichtquelle 8 emittiert wird und auf die Seitenwände 3 auftrifft, wird von den Seitenwänden 3 größtenteils absorbiert. Trifft nun ein Photon auf die erste SPAD 116 oder auf die zweite SPAD 126 und sind die erste SPAD 116 und die zweite SPAD 126 aktiviert, so löst die erste SPAD 116 oder die zweite SPAD 126 ein Ereignis aus. Dieses Ereignis wird an die elektronische Schaltung 100 weitergeleitet, wobei die elektrischen Verbindungen in Figur 2 nicht gezeigt sind.

In Figur 3 ist eine Draufsicht eines Gehäusequerschnitts des erfindungsgemäßen Quantenzufallszahlengenerators 1 zu sehen. Das Gehäuse 2 umfasst den Boden 4, sowie die Seitenwände 3, welche absorbierend ausgestaltet sind. Auf dem Boden 4 ist das Substrat 7 an- bzw. aufgebracht. Auf dem Substrat 7 sind die Lichtquelle 8 sowie die erste SPAD 116 und die zweite SPAD 126 an- bzw. aufgebracht. Hierbei können die erste SPAD 116 sowie die zweite SPAD 126 symmetrisch um die Lichtquelle 8 verteilt sein. Weiterhin ist es möglich, dass sich die Lichtquelle 8 und/oder die erste SPAD 116 und/oder die zweite SPAD 126 auf separaten Substraten befinden.

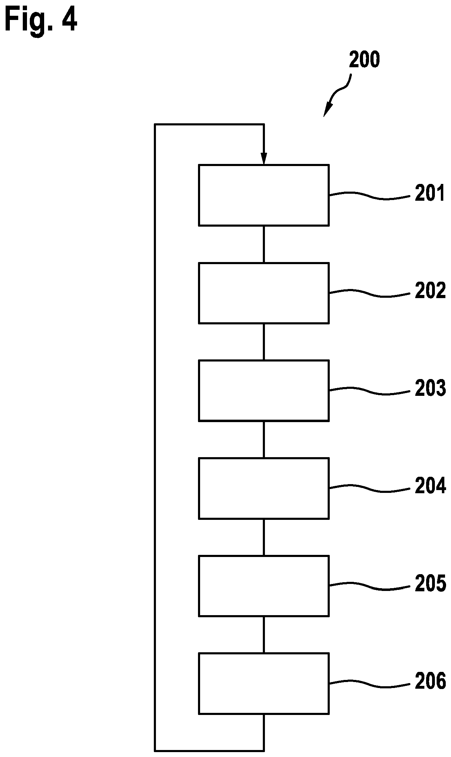

In Figur 4 ist ein erfindungsgemäßes Verfahren 200 zum Erzeugen einer Zufallszahl mit dem erfindungsgemäßen Quantenzufallszahlengenerator 1 dargestellt. Sofern der erste Flipflop 110 und der zweite Flipflop 120 nicht zurückgesetzt sind, kann ein erster Schritt 201 des Rücksetzens des ersten Flipflops 110 und des zweiten Flipflops 120 über den ersten Reset-Eingang 113 und den zweiten Reset-Eingang 123 erfolgen. Hierdurch liegen an dem ersten Ausgang 114 und an dem zweiten Ausgang 124 jeweils eine Null an. Die an dem ersten Ausgang 114 anliegende Null wird sowohl an den ersten Signalausgang 101 als auch an den ersten Eingang 131 des Oder-Gatters 130 weitergegeben. Die an dem zweiten Ausgang 124 anliegende Null wird an den zweiten Eingang 132 des Oder-Gatters 130 weitergegeben. Somit liegt auch an dem Ausgang 133 des Oder-Gatters 130 eine Null an, die an den zweiten Signalausgang 102 weitergegeben wird.

Da sowohl an dem ersten Ausgang 114 als auch an dem zweiten Ausgang 124 eine Null anliegt, liegen an den invertierten Ausgängen 115, 126 des ersten Flipflops 110 und des zweiten Flipflops 120 eine Eins an. Da der erste invertierte Ausgang 115 mit dem zweiten Dateneingang 121 und der zweite invertierte Ausgang 125 mit dem ersten Dateneingang 111 verbunden ist, liegen auch an dem ersten Dateneingang 111 sowie an dem zweiten Dateneingang 121 eine Eins an.

Nun kann in einem zweiten Schritt 202 ein Einlesen eines durch ein auf die erste SPAD 116 auftreffendes Photon erzeugten Signals als ein Ereignis durch den ersten Takteingang 112 des ersten Flipflops 110 erfolgen. Dieses Ereignis bzw. dieser am ersten Takteingang 112 anliegende Takt veranlasst, dass die an dem ersten Dateneingang 111 anliegende Eins in einem dritten Schritt 203 auf den ersten Ausgang 114 durchgeschaltet wird. Somit liegt nun an dem ersten Ausgang 114 ebenfalls eine Eins an.

Im Wesentlichen gleichzeitig erfolgt nun in einem vierten Schritt 204 ein Invertieren des an dem ersten Ausgang 114 anliegenden Wertes auf eine Null, wobei diese Null an dem ersten invertierten Ausgang 115 an den zweiten Dateneingang 121 ausgegeben wird. Nun liegt an dem zweiten Dateneingang 121 ebenfalls eine Null an. Fällt nun ein weiteres Photon auf die zweite SPAD 126, so wird das durch das auf die zweite SPAD 126 auftreffende Photon erzeugte Signal als ein Ereignis bzw. Takt an den zweiten Takteingang 122 weitergegeben. Da der zweite Dateneingang 121 jedoch auf Null steht, wird diese Null an den zweiten Ausgang 124 des zweiten Flipflop 120 durchgeschaltet.

Da in diesem Fall ein Photon nach dem Rücksetzen bzw. Aktivieren der elektrischen Schaltung 100 auf die erste SPAD 116 aufgetroffen ist, liegt nun an dem ersten Ausgang 114 eine Eins und an dem zweiten Ausgang 124 eine Null an. Dies entspricht einer ersten binären Zufallszahl, welche in einem fünften Schritt 205 des Ausgebens an eine hier nicht gezeigte Auswerteeinheit ausgegeben werden kann. Durch vielfaches Wiederholen der Schritte 201, 202, 203, 204, 205 können beliebig viele binäre Zufallszahlen und somit generell eine Zufallszahl erzeugt werden.

Fakultativ kann in einem sechsten Schritt 206 die an dem ersten Ausgang anliegende Eins an den ersten Eingang 131 sowie die an dem zweiten Ausgang 124 anliegende Null an den zweiten Eingang 132 des Oder-Gatters 130 weitergegeben werden. Hierdurch liegt an dem Ausgang 133 des Oder-Gatters 130 eine Eins an, die an den zweiten Signalausgang 102 ausgegeben wird. Durch die Verknüpfung beider Werte in dem Oder-Gatter 130 ist gewährleistet, dass ein Ereignis, welches durch ein auf die erste SPAD 116 oder die zweite SPAD 126 auftreffendes Photon ausgelöst wird, tatsächlich auch als solches registriert wird.

Dies ist insbesondere dann von Vorteil, wenn nicht die erste SPAD 116 sondern die zweite SPAD 126 ein Photon registriert. In diesem Fall wird das registrierte Ereignis an den zweiten Takteingang 122 als Taktsignal weitergegeben, wodurch die an den zweiten Dateneingang 212 anliegende Eins auf den zweiten Ausgang 124 durchgeschaltet wird. Die nun an dem zweiten invertierten Ausgang 125 anliegende Null wird im Wesentlichen zeitgleich an den ersten Dateneingang 111 des ersten Flipflops 110 weitergegeben. Auch wenn nun zusätzlich innerhalb der Auswertezeiten der elektronischen Schaltung 100 ein weiteres Photon auf die erste SPAD 116 auftrifft, so bewirkt das an dem ersten Takteingang 112 eingehende Taktsignal bzw. Ereignis lediglich ein Durchschalten der an dem ersten Dateneingang 111 anliegenden Null auf den ersten Ausgang 114. Diese an dem ersten Ausgang 114 anliegende Null wird nun sowohl an den ersten Eingang 131 des Oder-Gatters 130 sowie an den ersten Signalausgang 101 weitergegeben. Die an dem zweiten Ausgang 124 anliegende Eins wird an den zweiten Eingang 132 des Oder-Gatters 130 weitergegeben. Hierdurch liegt an dem Ausgang 133 des Oder-Gatters 130 eine Eins an, welche an den zweiten Signalausgang 102 weitergegeben wird.

Durch die an dem zweiten Signalausgang 102 anliegende Eins ist sichergestellt, dass ein Ereignis stattgefunden hat. Die an dem ersten Signalausgang anliegende Null entspricht ebenfalls einer binären Zufallszahl, aus der durch mehrfaches Wiederholen der Schritte 201, 202, 203, 204, 205, 206 eine Zufallszahl erzeugt werden kann.

## Patentansprüche

1. Quantenzufallszahlengenerator (1) mit einem ersten Einzelphotonendetektor (116), der ein erstes Ereignis detektiert, und einem zweiten Einzelphotonendetektor (126), der ein zweites Ereignis detektiert und mit einer elektronischen Schaltung (100) mittels derer der erste Einzelphotonendetektor (116) und der zweite Einzelphotonendetektor (117) derart verschaltet sind, dass nach Detektion des ersten Ereignisses dieses ausgegeben wird und eine Ausgabe eines detektierten zweiten Ereignisses unterdrückt wird, **dadurch gekennzeichnet, dass** die elektronische Schaltung (100) ein erstes bistabiles Kippglied (110) mit einem ersten Dateneingang (111), mit einem ersten Takteingang (112) und mit einem ersten Reset-Eingang (113) sowie mit einem ersten Ausgang (114) und mit einem ersten invertierten Ausgang (115) und ein zweites bistabiles Kippglied (120) mit einem zweiten Dateneingang (121), mit einem zweiten Takteingang (122) und mit einem zweiten Reset-Eingang (123) sowie mit einem zweiten Ausgang (124) und mit einem zweiten invertierten Ausgang (125) aufweist und der erste Einzelphotonendetektor (116) mit dem ersten Takteingang (112) des ersten bistabilen Kippglieds (110) und der zweite Einzelphotonendetektor (126) mit dem zweiten Takteingang (122) des zweiten bistabilen Kippglieds (120) verbunden ist.

2. Quantenzufallszahlengenerator (1) nach Anspruch 1, **dadurch gekennzeichnet, dass** die elektronische Schaltung (100) dazu ausgelegt ist, eine Detektion des ersten Ereignisses oder des zweiten Ereignisses anzuzeigen.

3. Quantenzufallszahlengenerator (1) nach Anspruch 1 oder 2, **dadurch gekennzeichnet, dass** die elektronische Schaltung rücksetzbar ausgestaltet ist.

4. Quantenzufallszahlengenerator (1) nach einem der Ansprüche 1 bis 3, **dadurch gekennzeichnet, dass** die elektronische Schaltung (100) ein Oder-Gatter (130) mit einem ersten Eingang (131), mit einem zweiten Eingang (132) und mit einem Ausgang (133) aufweist.

5. Quantenzufallszahlengenerator (1) nach einem der vorangehenden Ansprüche, **dadurch gekennzeichnet, dass** der erste Reset-Eingang (113) des ersten bistabilen Kippglieds (110) mit dem zweiten Reset-Eingang (123) des zweiten bistabilen Kippglieds (120) verbunden ist.

6. Quantenzufallszahlengenerator (1) nach einem der vorangehenden Ansprüche **gekennzeichnet durch** ein, insbesondere lichtdichtes, Gehäuse (2), in welchem der erste Einzelphotonendetektor (116), der zweite Einzelphotonendetektor (126) sowie eine Lichtquelle (8) angeordnet sind.

7. Quantenzufallszahlengenerator (1) nach Anspruch 6 **dadurch gekennzeichnet, dass** eine dem ersten Einzelphotonendetektor (116) und dem zweiten Einzelphotonendetektor (126) zugewandte Gehäuseseite (5), insbesondere gedämpft, reflektierend ausgestaltet ist und/oder dass weitere Gehäuseseiten (3, 4) absorbierend ausgestaltet sind.

8. Quantenzufallszahlengenerator (1) nach einem der vorangehenden Ansprüche **dadurch gekennzeichnet, dass** der erste Einzelphotonendetektor (116) und der zweite Einzelphotonendetektor (126) als Einzelphoton-Avalanchediode (116, 126), insbesondere als SPAD (116, 126), ausgestaltet ist.

9. Verfahren (200) zum Erzeugen einer Zufallszahl mit einem Quantenzufallsgenerators (1), insbesondere nach einem der Ansprüche 1 bis 8, mit den Schritten:
Einlesen (202) eines durch ein auf einen ersten Einzelphotonendetektor (116) auftreffendes Photon erzeugten ersten Signals als ein Ereignis durch einen ersten Takteingang (112) eines ersten bistabilen Kippglieds (110),
Durchschalten (203) eines an einem ersten Dateneingang (111) des ersten bistabilen Kippglieds (110) anliegenden ersten logischen Wertes an einen ersten Ausgang (114) des ersten bistabilen Kippglieds (110),
Invertieren (204) des an dem ersten Ausgang (114) anliegenden ersten logischen Wertes und Ausgeben des an einem ersten invertierten Ausgang (115) des ersten bistabilen Kippglieds (110) anliegenden ersten invertierten logischen Wertes an einen zweiten Dateneingang (121) eines zweiten bistabilen Kippglieds (120),
oder
Einlesen (202) eines durch ein auf einen zweiten Einzelphotonendetektor (126) auftreffendes Photon erzeugten zweiten Signals als das Ereignis durch einen zweiten Takteingang (122) eines zweiten bistabilen Kippglieds (120),
Durchschalten (203) eines an einem zweiten Dateneingang (121) des zweiten bistabilen Kippglieds (120) anliegenden ersten logischen Wertes an einen zweiten Ausgang (124) des zweiten bistabilen Kippglieds (120),
Invertieren (204) des an dem zweiten Ausgang (124) anliegenden zweiten logischen Wertes und Ausgeben des an einem zweiten invertierten Ausgang (125) des zweiten bistabilen Kippglieds (120) anliegenden zweiten invertierten logischen Wertes an einen ersten Dateneingang (111) des ersten bistabilen Kippglieds (110).

10. Verfahren (200) nach Anspruch 9 mit einem Schritt des Ausgebens (205) einer logischen Eins, wenn an dem ersten Ausgang (114) als erster logischer Wert eine logische Eins anliegt oder des Ausgebens (205) einer logischen Null, wenn an dem ersten Ausgang (114) als erster logischer Wert eine logische Null anliegt.

11. Verfahren (200) nach Anspruch 9 oder 10 mit einem Schritt des Weiterleitens (206) des an dem ersten Ausgang (114) anliegenden ersten logischen Wertes an einen ersten Eingang (131) eines Oder-Gatters (130) und des Weiterleitens (206) des an dem zweiten Ausgang (124) anliegenden zweiten logischen Wertes an einen zweiten Eingang (132) des Oder-Gatters (130) und des Ausgebens eines resultierenden logischen Wertes an einem Ausgang (133) des Oder-Gatters (130) zur Anzeige, dass das Ereignis stattgefunden hat.

12. Verfahren (200) nach einem der Ansprüche : 9 bis 11 mit einem Schritt des Rücksetzens (201) des ersten Ausgangs (114) und des zweiten Ausgangs (124).

13. Verfahren (200) nach einem der Ansprüche : 9 bis 12 **dadurch gekennzeichnet, dass** das Verfahren (200) wiederholt ausgeführt wird, dass eine binäre Zufallszahl aus einer Folge von logischen Einsen und Nullen gebildet wird und dass die Zufallszahl aus der binären Zufallszahl umgerechnet wird.

## Claims

1. Quantum random number generator (1) comprising a first single-photon detector (116), which detects a first event, a second single-photon detector (126), which detects a second event, and comprising an electronic circuit (100), by means of which the first single-photon detector (116) and the second single-photon detector (126) are interconnected in such a way that after detection of the first event the latter is output and an output of a detected second event is suppressed, **characterized in that** the electronic circuit (100) comprises a first bistable multivibrator (110) having a first data input (111), having a first clock input (112) and having a first reset input (113) and also having a first output (114) and having a first inverted output (115), and a second bistable multivibrator (120) having a second data input (121), having a second clock input (122) and having a second reset input (123) and also having a second output (124) and having a second inverted output (125), and the first single-photon detector (116) is connected to the first clock input (112) of the first bistable multivibrator (110) and the second single-photon detector (126) is connected to the second clock input (122) of the second bistable multivibrator (120) .

2. Quantum random number generator (1) according to Claim 1, **characterized in that** the electronic circuit (100) is designed to indicate a detection of the first event or of the second event.

3. Quantum random number generator (1) according to Claim 1 or 2, **characterized in that** the electronic circuit is configured such that it is resettable.

4. Quantum random number generator (1) according to any of Claims 1 to 3, **characterized in that** the electronic circuit (100) comprises an OR gate (130) having a first input (131), having a second input (132) and having an output (133).

5. Quantum random number generator (1) according to any of the preceding claims, **characterized in that** the first reset input (113) of the first bistable multivibrator (110) is connected to the second reset input (123) of the second bistable multivibrator (120) .

6. Quantum random number generator (1) according to any of the preceding claims, **characterized by** a, more particularly light-tight housing (2), in which the first single-photon detector (116), the second single-photon detector (126) and also a light source (8) are arranged.

7. Quantum random number generator (1) according to Claim 6, **characterized in that** a housing side (5) facing the first single-photon detector (116) and the second single-photon detector (126) is configured such that it is reflective, more particularly in a damped fashion, and/or **in that** further housing sides (3, 4) are configured such that they are absorbent.

8. Quantum random number generator (1) according to any of the preceding claims, **characterized in that** the first single-photon detector (116) and the second single-photon detector (126) are configured as a single-photon avalanche diode (116, 126), more particularly as a SPAD (116, 126).

9. Method (200) for generating a random number with a quantum random number generator (1), more particularly according to any of Claims 1 to 8, comprising the following steps:
Reading (202) in as an event, through a first clock input (112) of a first bistable multivibrator (110), a first signal generated by a photon impinging on a first single-photon detector (116),
Switching (203) through to a first output (114) of the first bistable multivibrator (110) a first logic value present at a first data input (111) of the first bistable multivibrator (110),
Inverting (204) the first logic value present at the first output (114) and outputting to a second data input (121) of a second bistable multivibrator (120) the first inverted logic value present at a first inverted output (115) of the first bistable multivibrator (110),
or
Reading (202) in as the event, through a second clock input (122) of a second bistable multivibrator (120), a second signal generated by a photon impinging on a second single-photon detector (126), Switching (203) through to a second output (124) of the second bistable multivibrator (120) a first logic value present at a second data input (121) of the second bistable multivibrator (120),
Inverting (204) the second logic value present at the second output (124) and outputting to a first data input (111) of the first bistable multivibrator (110) the second inverted logic value present at a second inverted output (125) of the second bistable multivibrator (120).

10. Method (200) according to Claim 9, comprising a step of outputting (205) a logic one if a logic one is present as first logic value at the first output (114), or outputting (205) a logic zero if a logic zero is present as first logic value at the first output (114).

11. Method (200) according to Claim 9 or 10, comprising a step of forwarding (206) to a first input (131) of an OR gate (130) the first logic value present at the first output (114), and forwarding (206) to a second input (132) of the OR gate (130) the second logic value present at the second output (124), and outputting a resulting logic value at an output (133) of the OR gate (130) for indicating that the event has taken place.

12. Method (200) according to any of Claims 9 to 11, comprising a step of resetting (201) the first output (114) and the second output (124).

13. Method (200) according any of Claims 9 to 12, **characterized in that** the method (200) is carried out repeatedly, **in that** a binary random number is formed from a sequence of logic ones and zeroes, and **in that** the random number is converted from the binary random number.

## Revendications

1. Générateur de nombre aléatoire quantique (1) comprenant un premier détecteur de photon unique (116), qui détecte un premier événement, et un deuxième détecteur de photon unique (126), qui détecte un deuxième événement et comprenant un circuit électronique (100) au moyen duquel le premier détecteur de photon unique (116) et le deuxième détecteur de photon unique (126) sont interconnectés de telle sorte qu'après la détection du premier événement, celui-ci est délivré en sortie et une délivrance en sortie d'un deuxième événement détecté est inhibée, **caractérisé en ce que** le circuit électronique (100) possède une première bascule bistable (110) comprenant une première entrée de données (111), comprenant une première entrée d'horloge (112) et comprenant une première entrée de réinitialisation (113) et comprenant aussi une première sortie (114) et comprenant une première sortie inversée (115) et une deuxième bascule bistable (120) comprenant une deuxième entrée de données (121), comprenant une deuxième entrée d'horloge (122) et comprenant une deuxième entrée de réinitialisation (123) et comprenant aussi une deuxième sortie (124) et comprenant une deuxième sortie inversée (125) et le premier détecteur de photon unique (116) est relié à la première entrée d'horloge (112) de la première bascule bistable (110) et le deuxième détecteur de photon unique (126) est relié à la deuxième entrée d'horloge (122) de la deuxième bascule bistable (120).

2. Générateur de nombre aléatoire quantique (1) selon la revendication 1, **caractérisé en ce que** le circuit électronique (100) est conçu pour indiquer une détection du premier événement ou du deuxième événement.

3. Générateur de nombre aléatoire quantique (1) selon la revendication 1 ou 2, **caractérisé en ce que** le circuit électronique est conçu de manière réinitialisable.

4. Générateur de nombre aléatoire quantique (1) selon l'une des revendications 1 à 3, **caractérisé en ce que** le circuit électronique (100) possède une porte OU (130) comprenant une première entrée (131), comprenant une deuxième entrée (132) et comprenant une sortie (133).

5. Générateur de nombre aléatoire quantique (1) selon l'une des revendications précédentes, **caractérisé en ce que** la première entrée de réinitialisation (113) de la première bascule bistable (110) est reliée à la deuxième entrée de réinitialisation (123) de la deuxième bascule bistable (120) .

6. Générateur de nombre aléatoire quantique (1) selon l'une des revendications précédentes, **caractérisé par** un boîtier (2), notamment opaque, dans lequel sont disposés le premier détecteur de photon unique (116), le deuxième détecteur de photon unique (126) ainsi qu'une source de lumière (8).

7. Générateur de nombre aléatoire quantique (1) selon la revendication 6, **caractérisé en ce qu'**un côté de boîtier (5) qui fait face au premier détecteur de photon unique (116) et au deuxième détecteur de photon unique (126) est de configuration réfléchissante, notamment atténuée, et/ou **en ce que** des côtés de boîtier supplémentaires (3, 4) sont de configuration absorbante.

8. Générateur de nombre aléatoire quantique (1) selon l'une des revendications précédentes, **caractérisé en ce que** le premier détecteur de photon unique (116) et le deuxième détecteur de photon unique (126) sont réalisés sous la forme de diodes à avalanche à photon unique (116, 126), notamment de SPAD (116, 126).

9. Procédé (200) de génération d'un nombre aléatoire avec un générateur aléatoire quantique (1), notamment selon l'une des revendications 1 à 8, comprenant les étapes suivantes :
lecture (202) d'un premier signal, généré par un photon qui vient frapper un premier détecteur de photon unique (116), en tant qu'un événement par une première entrée d'horloge (112) d'une première bascule bistable (110),
connexion (203) d'une première valeur logique présente à une première entrée de données (111) de la première bascule bistable (110) à une première sortie (114) de la première bascule bistable (110),
inversion (204) de la première valeur logique présente à la première sortie (114) et délivrance de la première valeur logique inversée présente à une première sortie inversée (115) de la première bascule bistable (110) à une deuxième entrée de données (121) d'une deuxième bascule bistable (120),
ou
lecture (202) d'un deuxième signal, généré par un photon qui vient frapper un deuxième détecteur de photon unique (126), en tant que ledit événement par une deuxième entrée d'horloge (122) d'une deuxième bascule bistable (120),
connexion (203) d'une première valeur logique présente à une deuxième entrée de données (121) de la deuxième bascule bistable (120) à une deuxième sortie (124) de la deuxième bascule bistable (120),
inversion (204) de la deuxième valeur logique présente à la deuxième sortie (124) et délivrance de la deuxième valeur logique inversée présente à une deuxième sortie inversée (125) de la deuxième bascule bistable (120) à une première entrée de données (111) de la première bascule bistable (110).

10. Procédé (200) selon la revendication 9, comprenant une étape de délivrance (205) d'un un logique lorsqu'un un logique est présent à la première sortie (114) en tant que première valeur logique ou de délivrance (205) d'un zéro logique lorsqu'un zéro logique est présent à la première sortie (114) en tant que première valeur logique.

11. Procédé (200) selon la revendication 9 ou 10, comprenant une étape de retransmission (206) de la première valeur logique présente à la première sortie (114) à une première entrée (131) d'une porte OU (130) et de retransmission (206) de la deuxième valeur logique présente à la deuxième sortie (124) à une deuxième entrée (132) de la porte OU (130) et de délivrance d'une valeur logique résultante à une sortie (133) de la porte OU (130) afin d'indiquer que l'événement a eu lieu.

12. Procédé (200) selon l'une des revendications 9 à 11, comprenant une étape de réinitialisation (201) de la première sortie (114) et de la deuxième sortie (124).

13. Procédé (200) selon l'une des revendications 9 à 12, **caractérisé en ce que** le procédé (200) est mis en œuvre de manière répétitive, **en ce qu'**un nombre aléatoire binaire est formé à partir d'une séquence de uns et de zéros logiques et **en ce que** le nombre aléatoire est converti à partir du nombre aléatoire binaire.
